# EUROPEAN PATENT APPLICATION

(11) **EP 4 776 471 A1**
(43) Date of publication of application: **15.07.2026**
(21) Application number: 25216458.7
(22) Date of filing: 17.11.2025
(51) Int. Cl.: H02J 7/60, H02J 7/00, H02J 9/00

(54) **STANDBY POWER SUPPLY CIRCUIT AND CONTROL METHOD THEREOF**

(30) Priority: 31.12.2024 CN 202411996926
(71) Applicant: Shenzhen Honor Electronic Co., Ltd., Shenzhen, Guangdong 518126 (CN)
(72) Inventor: HUANG, Shijian, Shenzhen 518126 (CN); WANG, Yuetian, Shenzhen 518126 (CN)
(74) Representative: Slingsby Partners LLP

(57) **Abstract**

The present application discloses a standby power supply circuit and a control method thereof, relates to a power supply circuit. The standby power supply circuit comprises: a first interface, at least one second interface, an input-output circuit, a DC conversion circuit, a control unit, and a standby power supply; wherein the first interface is connected to an input end of the input-output circuit, and the at least one second interface is connected to an output end of the input-output circuit; a first end of the DC conversion circuit is connected to the standby power supply, and a second end of the DC conversion circuit is connected to the input-output circuit; the control unit is connected to the first interface, the at least one second interface, the input-output circuit and the DC conversion circuit respectively, the control unit controls operation status of the input-output circuit and the DC conversion circuit according to connection status of the first interface and connection status of the at least one second interface.

## Description

### TECHNICAL FIELD

The present application relates to a power supply circuit, and in particular, to a standby power supply circuit and a control method thereof.

### BACKGROUND

A traditional large-scale UPS (uninterruptible power supply) is generally powered by AC (alternating current) output. For ordinary households, important uninterruptable power equipment is often small devices such as monitors, routers and etc. that consume low power. Obviously, purchasing a traditional large-scale UPS is too expensive and underutilized. In this case, a small-scale UPS can be used.

However, a small-scale UPS typically only consists of two main circuit components: one of which is a charging circuit from an input power supply to a battery, and the other is a power supply circuit from the battery to an output device. This means that when the UPS system is connected to both the power supply and a load device, it may charge an internal battery and at the same time, the internal battery supplies power to an external load. The simultaneous charging and discharging process of this internal battery may accelerate the aging process of the UPS battery to a certain extent, thereby reducing its service life.

This portion is intended to provide background or context for embodiments of the present application set forth in the claims. The description herein is not acknowledge as the prior art just because it is included in this portion.

### SUMMARY

An object of the present application is to provide a standby power supply circuit and a control method thereof, which can at least solve one of the above-mentioned technical problems in the current standby power supply circuit and a control method thereof.

An embodiment of the present application provides a standby power supply circuit, comprising: a first interface, at least one second interface, an input-output circuit, a DC conversion circuit, a control unit, and a standby battery; wherein the first interface is connected to an input end of the input-output circuit, and the at least one second interface is connected to an output end of the input-output circuit; a first end of the DC conversion circuit is connected to the standby battery, and a second end of the DC conversion circuit is connected to the input-output circuit; the control unit is connected to the first interface, the at least one second interface, the input-output circuit and the DC conversion circuit respectively, the control unit detects connection status of the first interface and connection status of the at least one second interface, and controls operation status of the input-output circuit and the DC conversion circuit according to the connection status of the first interface and the connection status of the at least one second interface.

In some embodiments, the first interface comprises a first DC female socket which includes a first positive pin, a first negative pin and a first detection pin, wherein when the first DC female socket is not connected with an input power supply, the first detection pin is short-circuited to the first negative pin, and when the first DC female socket is connected with an input power supply, a first DC line of the input power supply pushes the first detection pin having elasticity upwards to be open, causing the first detection pin to be detached from the first negative pin; the second interface comprises a second DC female socket which includes a second positive pin, a second negative pin and a second detection pin, wherein when the second DC female socket is not connected with a load, the second detection pin is short-circuited to the second negative pin, and when the second DC female socket is connected with a load, a second DC line of the load pushes the second detection pin having elasticity upwards to be open, causing the second detection pin to be detached from the second negative pin.

In some embodiments, the control unit comprises an input detection pin and an output detection pin, wherein the input detection pin is connected to the first detection pin, the number of the output detection pin is greater than or equal to the number of the second interface, and the second detection pin of each of the second interfaces is connected to one of the output detection pins.

In some embodiments, a load sampling resistor is further included, wherein the number of the load sampling resistor is greater than or equal to the number of the second interface, and the second negative pin of each of the second interfaces is grounded through one of the load sampling resistors; the control unit further comprises a current output detection pin, wherein the number of the current output detection pin is greater than or equal to the number of the second interface, and the second negative pin of each of the second interfaces is connected to one of the current output detection pins.

In some embodiments, a charging sampling resistor is further included, wherein a negative electrode of the standby battery is grounded through the charging sampling resistor; the control unit further comprises a charging current detection pin which is connected to a negative electrode of the standby battery.

In some embodiments, the input-output circuit comprises a first branch circuit and a second branch circuit connected in parallel, and the second end of the DC conversion circuit is connected to the second branch circuit.

In some embodiments, the first branch circuit comprises a first switching transistor, the second branch circuit comprises a second switching transistor and a third switching transistor, and the control unit comprises a first enable pin, a second enable pin, and a third enable pin; wherein a first end of the first switching transistor is connected to the first positive pin, a second end of the first switching transistor is connected to the second positive pin of each of the second interfaces, and a third end of the first switching transistor is connected to the first enable pin of the control unit; a first end of the second switching transistor is connected to the first positive pin, a second end of the second switching transistor is connected to a first end of the third switching transistor, a second end of the third switching transistor is connected to the second positive pin of each of the second interfaces, a third end of the second switching transistor is connected to the second enable pin of the control unit, and a third end of the third switching transistor is connected to the third enable pin of the control unit; the second end of the DC conversion circuit is connected to the second end of the second switching transistor.

In some embodiments, the DC conversion circuit comprises a buck-boost circuit, a boost circuit, or a buck circuit.

In some embodiments, the buck-boost circuit comprises a first capacitor, a fourth switching transistor, a fifth switching transistor, a first inductor, a sixth switching transistor, a seventh switching transistor and a second capacitor; the control unit includes a first output pin of a high level for outputting a first pulse modulation signal, a second output pin of a low level for outputting the first pulse modulation signal, a third output pin of a high level for outputting a second pulse modulation signal, and a fourth output pin of a low level for outputting the second pulse modulation signal; wherein a first end of the first capacitor is connected to the second end of the second switching transistor, and a second end of the first capacitor is grounded; a first end of the fourth switching transistor is connected to a first end of the first inductor, a second end of the fourth switching transistor is connected to the first end of the first inductor, and a third end of the fourth switching transistor is connected to the first output pin of the control unit; a first end of the fifth switching transistor is connected to the first end of the first inductor, a second end of the fifth switching transistor is grounded, and a third end of the fifth switching transistor is connected to the second output pin of the control unit; a first end of the sixth switching transistor is connected to a second end of the first inductor, a second end of the sixth switching transistor is connected to the positive electrode of the standby battery, and a third end of the sixth switching transistor is connected to the third output pin of the control unit; a first end of the seventh switching transistor is connected to the first end of the sixth switching transistor, a second end of the seventh switching transistor is grounded, and a third end of the seventh switching transistor is connected to the fourth output pin of the control unit; a first end of the second capacitor is connected to the positive electrode of the standby battery, and a second end of the second capacitor is grounded.

In some embodiments, the boost circuit comprises a third capacitor, an eighth switching transistor, a ninth switching transistor, a second inductor, and a fourth capacitor; the control unit includes a first output pin of a high level for outputting a first pulse modulation signal, and a second output pin of a low level for outputting the first pulse modulation signal; wherein a first end of the third capacitor is connected to the second end of the second switching transistor, and a second end of the third capacitor is grounded; a first end of the eighth switching transistor is connected to the first end of the third capacitor, a second end of the eighth switching transistor is connected to the first end of the second inductor, and a third end of the eighth switching transistor is connected to the first output pin of the control unit; a first end of the ninth switching transistor is connected to the second end of the eighth switching transistor, a second end of the ninth switching transistor is grounded, and a third end of the ninth switching transistor is connected to the second output pin of the control unit; the second end of the second inductor is connected to the positive electrode of the standby battery; a first end of the fourth capacitor is connected to the positive electrode of the standby battery, and a second end of the fourth capacitor is grounded.

In some embodiments, the buck circuit comprises a fifth capacitor, a third inductor, a tenth switching transistor, an eleventh switching transistor and a sixth capacitor; the control unit comprises a third output pin of a high level for outputting a second pulse modulation signal and a fourth output pin of a low level for outputting the second pulse modulation signal; wherein a first end of the fifth capacitor is connected to the second end of the second switching transistor, and a second end of the fifth capacitor is grounded; a first end of the third inductor is connected to the first end of the fifth capacitor, a second end of the third inductor is connected to a first end of the tenth switching transistor, a second end of the tenth switching transistor is connected to the positive electrode of the standby battery, and a third end of the tenth switching transistor is connected to the third output pin of the control unit; a first end of the eleventh switching transistor is connected to the first end of the tenth switching transistor, a second end of the eleventh switching transistor is grounded, and a third end of the eleventh switching transistor is connected to the fourth output pin of the control unit; a first end of the sixth capacitor is connected to the positive electrode of the standby battery, and a second end of the sixth capacitor is grounded.

The embodiment of the present application further provides a control method of a standby power supply circuit. Based on the standby power supply circuit described in any of the above embodiments, the method comprises:
detecting connection status of the first interface and connection status of the at least one second interface;
controlling operation status of the input-output circuit and the DC conversion circuit based on the connection status of the first interface and the connection status of the at least one second interface.

In some embodiments, the controlling operation status of the input-output circuit and the DC conversion circuit based on the connection status of the first interface and the connection status of the at least one second interface includes:
if the first interface is not connected with the input power supply and none of the second interfaces is connected with a load, controlling the input-output circuit and the DC conversion circuit to be turned off;
if the first interface is not connected with the input power supply and the at least one second interface is connected with a load, controlling the DC conversion circuit to be turned on and controlling a portion of the input-output circuit that is connected between the DC conversion circuit and the second interface to be turned on, so that the standby battery supplies power to the load with which the at least one second interface is connected;
if the first interface is connected with the input power supply and the at least one second interface is connected with a load, controlling the input-output circuit to be turned on and controlling the DC conversion circuit to be turned on or off, so that the input power supply preferentially supplies power to the load with which the at least one second interface is connected and charges the standby battery when there is excess power, and powering off the standby battery when it is fully charged;
if the first interface is connected with the input power supply and none of the second interfaces is connected with a load, controlling the DC conversion circuit to be turned on and controlling a portion of the input-output circuit that is between the first interface and the DC conversion circuit to be turned on, so that the input power supply charges the standby battery.

In some embodiments, the method further comprise:
detecting, in real time, current output from the at least one second interface to the load and charging current of the standby battery;
correspondingly, the if the first interface is connected with the input power supply and the at least one second interface is connected with a load, controlling the input-output circuit to be turned on and controlling the DC conversion circuit to be turned on or off, so that the input power supply preferentially supplies power to the load with which the at least one second interface is connected and charges the standby battery when there is excess power, and powering off the standby battery when it is fully charged, includes:
   if the first interface is connected with the input power supply and the at least one second interface is connected with a load, controlling a portion of the input-output circuit that is between the first interface and the second interface to be turned on;
   determining the charging current for the standby battery based on the current detected in real time that is output from the second interface connected with the load to the load and maximum operating current of the input power supply;
   controlling a portion of the input-output circuit that is between the first interface and the DC conversion circuit to be turned on, and controlling the DC conversion circuit to be turned on, so that the input power supply charges the standby battery with the charging current;
   based on the charging current of the standby battery that is detected in real time, determining whether the standby battery is fully charged, and controlling the DC conversion circuit to be turned off when the standby battery is fully charged, so that the standby battery is powered off.

The standby power supply circuit and a control method thereof provided in the embodiment of the present application comprise an input-output circuit and a DC conversion circuit, in which the connection status of the first interface and the connection status of the second interface can be detected respectively by a control unit, and the operation status of the input-output circuit and the DC conversion circuit can be controlled according to the connection status of the first interface and the connection status of the second interface, in this way, when the first interface is connected with the input power supply and the second interface is connected with the load, the input-output circuit and the DC conversion circuit can be controlled to be turned on by the control unit, so that the input power supply supplies power to the load through the input-output circuit, and charges the standby battery through the input-output circuit and the DC conversion circuit. That is to say, the standby power supply circuit provided in the embodiment of the present application can directly supply power to the load using the input power supply at first when it is connected to both the input power supply and the load, and then charge the standby battery with excess power if the input power supply has excess power, thereby avoiding charging and discharging the standby battery simultaneously when both the input power supply and the load are connected, and thus extending service life of the standby battery.

### BRIEF DESCRIPTION OF DRAWINGS

In order to more clearly explain the technical solution in the embodiments of the present application, drawings that need to be used in description of the embodiments will be simply introduced below, obviously the drawings in the following description are merely some examples of the present application, for persons ordinarily skilled in the art, it is also possible to obtain other drawings according to these drawings without making creative efforts.
FIG. 1 is a structural schematic of a standby power supply circuit provided in an embodiment of the present application.
FIG. 2 is a structural schematic of another standby power supply circuit provided in an embodiment of the present application.
FIG. 3 is a structural schematic of yet another standby power supply circuit provided in an embodiment of the present application.
FIG. 4 is a flowchart schematic of a control method of a standby power supply circuit provided in an embodiment of the present application.
FIG. 5 is a schematic diagram of the switching logic between various operation states of a standby power supply circuit provided in an embodiment of the present application.
FIG. 6 is part of a flowchart schematic of a control method of a standby power supply circuit provided in an embodiment of the present application.

### DESCRIPTION OF EMBODIMENTS

Hereinafter the technical solution in the embodiments of the present application will be described clearly and integrally in combination with the accompanying drawings in the embodiments of the present application, and obviously the described embodiments are merely part of the embodiments, not all of the embodiments. Any other embodiment obtained by those skilled in the art based on the embodiments of the present application without paying any creative labor fall within the protection scope of the present application.

With reference to the specification and drawings below, a specific embodiment of the present application is disclosed in detail, which specifies the manner in which the principle of the present application can be adopted. It should be understood that, the scope of the embodiment of the present application is not limited. Within the scope of the spirit and clause of the appended claims, the embodiment of the present application includes many variations, modifications and equivalents.

The features described and/or shown for one embodiment can be used in one or more other embodiments in the same or similar manner, can be combined with the features in other embodiments or replace the features in other embodiments.

It should be emphasized that, the term "include/contain" refers to, when being used in the text, existence of features, parts, steps or assemblies, without exclusion of existence or attachment of one or more other features, parts, steps or assemblies.

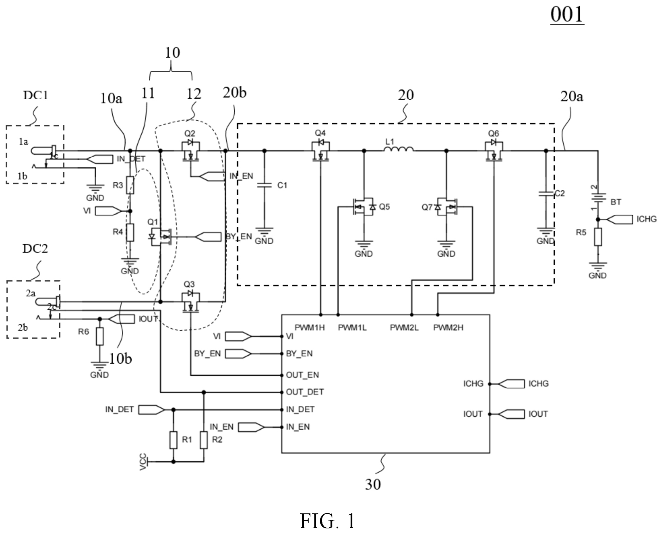

In order to solve at least one of the above-mentioned problems in the prior art, in a first aspect, the present application provides a standby power supply circuit. As shown in FIG. 1, the standby power supply circuit 001 comprises a first interface DC1, at least one second interface DC2, an input-output circuit 10, a DC conversion circuit (DC-DC circuit) 20, a control unit 30, and a standby battery BT; wherein the first interface DC1 is connected to the first end 10a of the input-output circuit 10, and the at least one second interface DC2 is connected to the output end 10b of the input-output circuit 10; the first end 20a of the DC conversion circuit 20 is connected to the standby battery BT, and the second end 20b of the DC conversion circuit 20 is connected to the input-output circuit 10; the control unit 30 is connected to the first interface DC1, the at least one second interface DC2, the input-output circuit 10 and the DC conversion circuit 20 respectively, the control unit 30 detects the connection status of the first interface DC1 and the connection status of the at least one second interface DC2, and controls the operation status of the input-output circuit 10 and the DC conversion circuit 20 based on the connection status of the first interface DC1 and the at least one second interface DC2.

It can be understood that the first interface DC1 is the input interface of the standby power supply circuit 001, used to connect the input power supply; the second interface DC2 is the output interface of the standby power supply circuit 001, used to connect the load. In the embodiment of the present invention, there may be more than one second interface DC2. When the standby power supply circuit 001 includes two or more second interfaces DC2, each second interface DC2 is connected to the input-output circuit 10 and the control unit 30 in a similar way, which will not be repeated here.

The connection status of the first interface DC1 includes that an input power supply is not connected and that an input power supply is connected, and the connection status of each of the second interfaces DC2 includes that a load is not connected and that a load is connected; the operating state of the input-output circuit 10 includes turn-on and turn-off, and similarly, the operating state of the DC conversion circuit 20 includes turn-on and turn-off. The control unit 30 has two functions of controlling and power conversion. The control unit 30 can be an editable device such as a singlechip, a DSP (digital signal processor), or an FPGA (field programmable gate array). Alternatively, the control unit 30 can include a controller and a dedicated analog power management chip, which respectively implement the two functions of controlling and power conversion.

The standby power supply circuit 001 provided in the embodiment of the present application comprise an input-output circuit 10 and a DC conversion circuit 20, in which the connection status of the first interface DC1 and the connection status of the second interface DC2 can be detected respectively by a control unit 30, and the operation status of the input-output circuit 10 and the DC conversion circuit 20 can be controlled according to the connection status of the first interface DC1 and the connection status of the second interface DC2, in this way, when the first interface DC1 is connected with the input power supply and the second interface DC2 is connected with the load, the input-output circuit 10 and the DC conversion circuit 20 can be controlled to be turned on by the control unit 30, so that the input power supply supplies power to the load through the input-output circuit 10, and charges the standby battery BT through the input-output circuit 10 and the DC conversion circuit 20. That is to say, the standby power supply circuit 001 provided in the embodiment of the present application can directly supply power to the load through the input-output circuit 10 when it is connected to both the input power supply and the load, and then charge the standby battery BT with excess power if the input power supply has excess power, thereby avoiding charging and discharging the standby battery BT simultaneously when both the input power supply and the load are connected, and thus extending service life of the standby battery BT.

In addition, the current method for detecting connection and removal of a device often relies on an impedance of the device itself. Specifically, connection recognition of the load is achieved by designing a weak output and detecting voltage change of the weak output, and the removal relies on the output current, and when the current is below the threshold point, it is considered that the device has been removed and the output is turned off. From this, it can be seen that for a device having a very high non-working impedance per se, it is impossible to recognize the connection of the device due to small change in the weak output voltage. In addition, for a device that works intermittently or has very low working current, removal detection may be triggered incorrectly, thereby causing the device to fail to work normally.

In this regard, the embodiment of the present application further provides a detection circuit for detecting connection and removal of a device, to solve the above-mentioned problems of the current method for detecting connection and removal of a device. As shown in FIG. 1, the first interface DC1 comprises a first DC (direct current) socket which includes a first positive pin 1a, a first negative pin 1b and a first detection pin 1c, wherein when the first DC female socket is not connected with an input power supply, the first detection pin 1c is short-circuited to the first negative pin 1b, and when the first DC female socket is connected with an input power supply, a first DC line of the input power supply pushes the first detection pin 1c having elasticity upwards to be open, causing the first detection pin 1c to be detached from the first negative pin 1b. Similarly, the second interface DC2 comprises a second DC female socket which includes a second positive pin 2a, a second negative pin 2b and a second detection pin 2c, wherein when the second DC female socket is not connected with a load, the second detection pin 2c is short-circuited to the second negative pin 2b, and when the second DC female socket is connected with a load, a second DC line of the load pushes the second detection pin 2c having elasticity upwards to be open, causing the second detection pin 2c to be detached from the second negative pin 2b.

Specifically, in addition to a positive pin and a negative pin, the DC female socket provided in this embodiment also has a detection pin. When the DC line of the input power supply/the load is not connected to the socket, the detection pin is short-circuited with the negative pin. When the DC line is connected to the socket, the end of the DC line pushes this detection pin having elasticity upwards to be open, causing the detection pin to be detached from the negative pin. This can ensure that there is no error detection of the connection and removal of the device, while allowing the device to operate intermittently or to operate with extremely low current.

As shown in FIG. 1, in some embodiments, the control unit 30 comprises an input detection pin IN_DET and an output detection pin OUT_DET, wherein the input detection pin IN_DET is connected to the first detection pin 1c, the number of the output detection pin OUT_DET is greater than or equal to the number of the second interface DC2, and the second detection pin 2c of each of the second interfaces DC2 is connected to one of the output detection pins OUT_DET. In other words, for the standby power circuit 001 with at least one second interface DC2, it is necessary to have at least the same number of output detection pins OUT_DET as the second interface DC2, so that the second detection pin 2c of each second interface DC2 is connected to an output detection pin OUT_DET, and in this way, the control unit 30 can detect the load connection status of each second interface DC2.

Specifically, taking FIG. 1 as an example, the standby power supply circuit 001 can be connected to an internal power supply VCC and the first detection pin 1c/second detection pin 2c through a resistor R1/R2 with a larger resistance value. When there is no line material connected, the first detection pin 1c/second detection pin 2c is pulled down to a low level by the negative electrode. After a line material is connected, the first detection pin 1c/second detection pin 2c is disconnected from the negative electrode and hangs in the air to be converted into a high level. By detecting the level changes of the first detection pin 1c/second detection pin 2c, it can be determined whether the input power/load is connected or removed.

As shown in FIG. 1, in some embodiments, the standby power supply circuit 001 further comprises a load sampling resistor R6, wherein the number of the load sampling resistor R6 is greater than or equal to the number of the second interface DC2, and the second negative pin 2b of each of the second interfaces DC2 is grounded through one of the load sampling resistors R6; the control unit 30 further comprises a current output detection pin IOUT, wherein the number of the current output detection pin IOUT is greater than or equal to the number of the second interface DC2, and the second negative pin 2b of each of the second interfaces DC2 is connected to one of the current output detection pins IOUT. In other words, for the standby power circuit 001 with at least one second interface DC2, it is necessary to have at least the same number of load sampling resistors R6 as the second interface DC2, so that the second negative pin 2b of each second interface DC2 can be grounded through one of the load sampling resistors R6; in addition, the control unit 30 also needs to have at least the same number of current output detection pins IOUT as the second interface DC2, so that the second negative pin 2b of each of the second interfaces DC2 can be connected to one of the current output detection pins IOUT, thereby enabling the control unit 30 to detect the load current of each second interface DC2.

As shown in FIG. 1, the standby power supply circuit 001 further comprises a charging sampling resistor R5, wherein a negative electrode 1 of the standby battery BT is grounded through the charging sampling resistor R5; the control unit 30 further comprises a charging current detection pin ICHG which is connected to the negative electrode 1 of the standby battery BT. The charging current detection pin ICHG is used to set and monitor the charging current, ensuring the safety and efficiency of the battery charging process.

As shown in FIG. 1, in some embodiments, the input-output circuit 10 comprises a first branch circuit 11 and a second branch circuit 12 connected in parallel, and the second end 20b of the DC conversion circuit 20 is connected to the second branch circuit 12.

As shown in FIG. 1, in some embodiments, the first branch circuit 11 comprises a first switching transistor Q1, the second branch circuit 12 comprises a second switching transistor Q2 and a third switching transistor Q3, and the control unit 30 comprises a first enable pin BY_EN, a second enable pin IN_EN, and a third enable pin OUT_EN; wherein a first end of the first switching transistor Q1 is connected to the first positive pin 1a, a second end of the first switching transistor Q1 is connected to the second positive pin 2a of each of the second interfaces DC2, and a third end of the first switching transistor Q1 is connected to the first enable pin BY_EN of the control unit 30; a first end of the second switching transistor Q2 is connected to the first positive pin 1a, a second end of the second switching transistor Q2 is connected to a first end of the third switching transistor Q3, a second end of the third switching transistor Q3 is connected to the second positive pin 2a of each of the second interfaces DC2, a third end of the second switching transistor Q2 is connected to the second enable pin IN_EN of the control unit 30, and a third end of the third switching transistor Q3 is connected to the third enable pin OUT_EN of the control unit 30; the second end 20b of the DC conversion circuit 20 is connected to the second end of the second switching transistor Q2.

In some embodiments, the DC conversion circuit 20 comprises a buck-boost circuit, a boost circuit, or a buck circuit. For example, the DC conversion circuit 20 shown in FIG. 1 uses a buck-boost circuit to achieve power supply conversion. In addition, for a standby power supply circuit product with known standby battery voltage always higher than a power supply voltage of the device, a buck circuit can be used. For a standby power supply circuit product with known standby battery voltage always lower than a power supply voltage of the device, a boost circuit can be used, and the control method of the standby power circuit can be the same.

As shown in FIG. 1, in some embodiments, the DC conversion circuit 20 includes a buck-boost circuit which may include a first capacitor C1, a fourth switching transistor Q4, a fifth switching transistor Q5, a first inductor L1, a sixth switching transistor Q6, a seventh switching transistor Q7 and a second capacitor C2; the control unit 30 includes a first output pin PWM1H of a high level for outputting a first pulse modulation signal, a second output pin PWM1L of a low level for outputting the first pulse modulation signal, a third output pin PWM2H of a high level for outputting a second pulse modulation signal, and a fourth output pin PWM2L of a low level for outputting the second pulse modulation signal; wherein a first end of the first capacitor C1 is connected to the second end of the second switching transistor Q2, and a second end of the first capacitor C1 is grounded; a first end of the fourth switching transistor Q4 is connected to a first end of the first inductor L1, a second end of the fourth switching transistor Q4 is connected to the first end of the first inductor L1, and a third end of the fourth switching transistor Q4 is connected to the first output pin PWM1H of the control unit 30; a first end of the fifth switching transistor Q5 is connected to the first end of the first inductor L1, a second end of the fifth switching transistor Q5 is grounded, and a third end of the fifth switching transistor Q5 is connected to the second output pin PWM1L of the control unit 30; a first end of the sixth switching transistor Q6 is connected to a second end of the first inductor L1, a second end of the sixth switching transistor Q6 is connected to the positive electrode 2 of the standby battery BT, and a third end of the sixth switching transistor Q6 is connected to the third output pin PWM2H of the control unit 30; a first end of the seventh switching transistor Q7 is connected to the first end of the sixth switching transistor Q6, a second end of the seventh switching transistor Q7 is grounded, and a third end of the seventh switching transistor Q7 is connected to the fourth output pin PWM2L of the control unit 30; a first end of the second capacitor C2 is connected to the positive electrode 2 of the standby battery BT, and a second end of the second capacitor C2 is grounded.

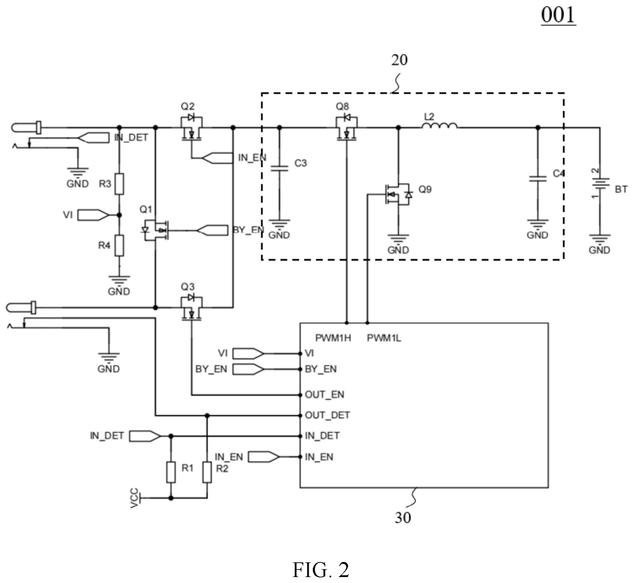

As shown in FIG. 2, in some embodiments, the DC conversion circuit 20 comprises a boost circuit which includes a third capacitor C3, an eighth switching transistor Q8, a ninth switching transistor Q9, a second inductor L2, and a fourth capacitor C4; the control unit 30 includes a first output pin PWM1H of a high level for outputting a first pulse modulation signal, and a second output pin PWM1L of a low level for outputting the first pulse modulation signal; wherein a first end of the third capacitor C3 is connected to the second end of the second switching transistor Q2, and a second end of the third capacitor C3 is grounded; a first end of the eighth switching transistor Q8 is connected to the first end of the third capacitor C3, a second end of the eighth switching transistor Q8 is connected to the first end of the second inductor L2, and a third end of the eighth switching transistor Q8 is connected to the first output pin PWM1H of the control unit 30; a first end of the ninth switching transistor Q9 is connected to the second end of the eighth switching transistor Q8, a second end of the ninth switching transistor Q9 is grounded, and a third end of the ninth switching transistor Q9 is connected to the second output pin PWM1L of the control unit 30; the second end of the second inductor L2 is connected to the positive electrode 2 of the standby battery BT; a first end of the fourth capacitor C4 is connected to the positive electrode 2 of the standby battery BT, and a second end of the fourth capacitor C4 is grounded.

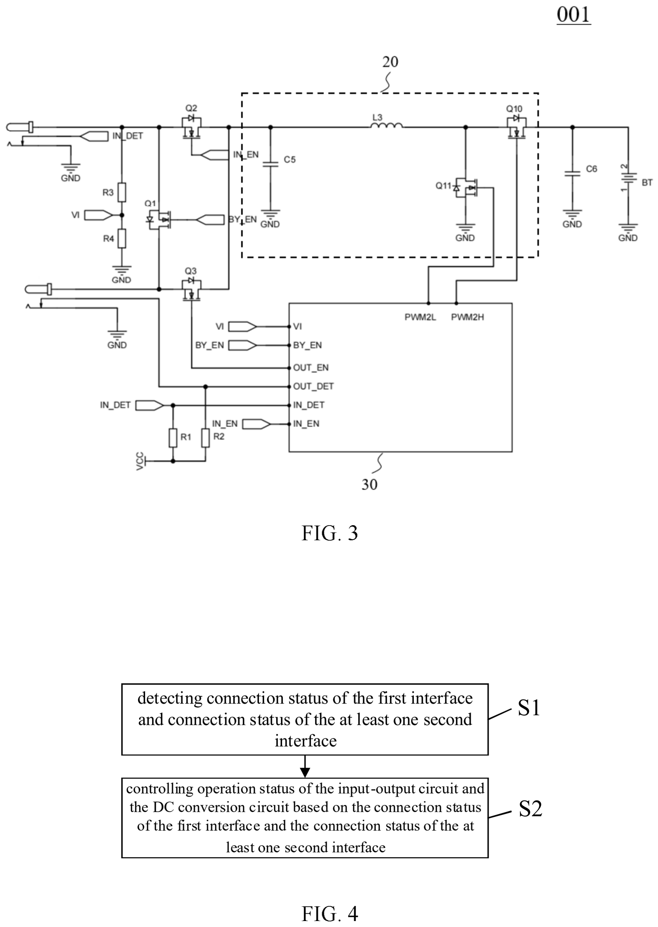

As shown in FIG. 3, in some embodiments, the DC conversion circuit 20 comprises a buck circuit which includes a fifth capacitor C5, a third inductor L3, a tenth switching transistor Q10, an eleventh switching transistor Q11 and a sixth capacitor C6; the control unit 30 comprises a third output pin PWM2H of a high level for outputting a second pulse modulation signal and a fourth output pin PWM2L of a low level for outputting the second pulse modulation signal; wherein a first end of the fifth capacitor C5 is connected to the second end of the second switching transistor Q2, and a second end of the fifth capacitor C5 is grounded; a first end of the third inductor L3 is connected to the first end of the fifth capacitor C5, a second end of the third inductor L3 is connected to a first end of the tenth switching transistor Q10, a second end of the tenth switching transistor Q10 is connected to the positive electrode 2 of the standby battery BT, and a third end of the tenth switching transistor Q10 is connected to the third output pin PWM2H of the control unit 30; a first end of the eleventh switching transistor Q11 is connected to the first end of the tenth switching transistor Q10, a second end of the eleventh switching transistor Q11 is grounded, and a third end of the eleventh switching transistor Q11 is connected to the fourth output pin PWM2L of the control unit 30; a first end of the sixth capacitor C6 is connected to the positive electrode 2 of the standby battery BT, and a second end of the sixth capacitor C6 is grounded.

In any of the above embodiments, NMOS (N-type metal oxide semiconductor) can be used as the switching transistor. In addition, other transistors such as PMOS (P-type metal oxide semiconductor), thyristor, triode, etc. can also be used in applications to achieve similar switching functions.

Based on the same inventive concept, the embodiment of the present application further provides a control method of a standby power supply circuit. Based on the standby power supply circuit described in any of the above embodiments. FIG. 4 is a flowchart schematic of a control method of a standby power supply circuit provided in an embodiment of the present application. As shown in FIG. 4, the method comprises:
a step S1: detecting connection status of the first interface and connection status of the at least one second interface;
a step S2: controlling operation status of the input-output circuit and the DC conversion circuit based on the connection status of the first interface and the connection status of the at least one second interface.

With the control method of a standby power supply circuit provided in the embodiment of the present application, referring to FIG. 1, when the first interface DC1 is connected with the input power supply and the second interface DC2 is connected with the load, the input-output circuit 10 and the DC conversion circuit 20 can be controlled to be turned on by the control unit 30, so that the input power supply supplies power to the load through the input-output circuit 10, and charges the standby battery BT through the input-output circuit 10 and the DC conversion circuit 20. That is to say, the standby power supply circuit 001 provided in the embodiment of the present application can directly supply power to the load through the input-output circuit 10 when it is connected to both the input power supply and the load, and then charge the standby battery BT with excess power if the input power supply has excess power, thereby avoiding charging and discharging the standby battery BT simultaneously when both the input power supply and the load are connected, and thus extending service life of the standby battery BT.

In some embodiments, the above step S2 may include: if the first interface is not connected with the input power supply and none of the second interfaces is connected with a load, controlling the input-output circuit and the DC conversion circuit to be turned off;
if the first interface is not connected with the input power supply and the at least one second interface is connected with a load, controlling the DC conversion circuit to be turned on and controlling a portion of the input-output circuit that is connected between the DC conversion circuit and the second interface to be turned on, so that the standby battery supplies power to the load with which the at least one second interface is connected;
if the first interface is connected with the input power supply and the at least one second interface is connected with a load, controlling the input-output circuit to be turned on and controlling the DC conversion circuit to be turned on or off, so that the input power supply preferentially supplies power to the load with which the at least one second interface is connected and charges the standby battery when there is excess power, and powering off the standby battery when it is fully charged;
if the first interface is connected with the input power supply and none of the second interfaces is connected with a load, controlling the DC conversion circuit to be turned on and controlling a portion of the input-output circuit that is between the first interface and the DC conversion circuit to be turned on, so that the input power supply charges the standby battery.

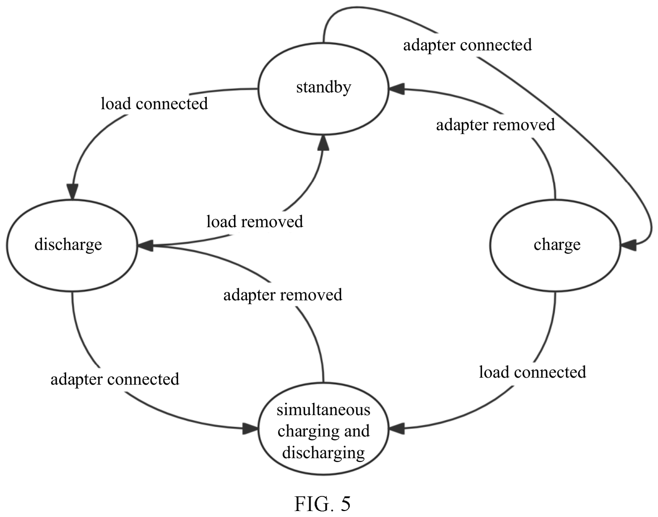

Specifically, as shown in FIG. 5, the standby power supply circuit provided in this embodiment includes four states: standby, discharge, charge, and simultaneous charging and discharging. The switching logic and conditions between the states are as follows:
when there is no load and no input power supply is connected, the standby power supply circuit defaults to be in a standby mode, and the input-output circuit and the DC conversion circuit stop working at this time.

When the load line is connected separately (at least one load is connected), the standby power supply circuit enters a discharge state, at this time, the DC conversion circuit is turned on, and a portion of the input-output circuit that is connected between the DC conversion circuit and the second interface is turned on, causing the standby battery to supply power to the load. After the load is removed, it returns to the standby state, and the standby power supply circuit is the same as the standby state described above.

After connecting to the input power supply in the discharge state, it enters the simultaneous charging and discharging state. At this time, the input-output circuit is turned on, causing the input power supply to preferentially supply power to the load. When there is excess power, the DC conversion circuit is turned on to charge the standby battery. After the standby battery is fully charged, the DC conversion circuit is turned off, and the standby battery is not charged or discharged, extending the service life of the battery life. When there is no excess power, the DC conversion circuit is turned off and does not charge the standby battery.

All loads are removed in the simultaneous charging and discharging state, or the input power supply is connected in standby state to enter the charging state, at this time, the DC conversion circuit is turned on, and a portion of the input-output circuit that is between the first interface and the DC conversion circuit is also turned on, and the standby battery is charged at full speed.

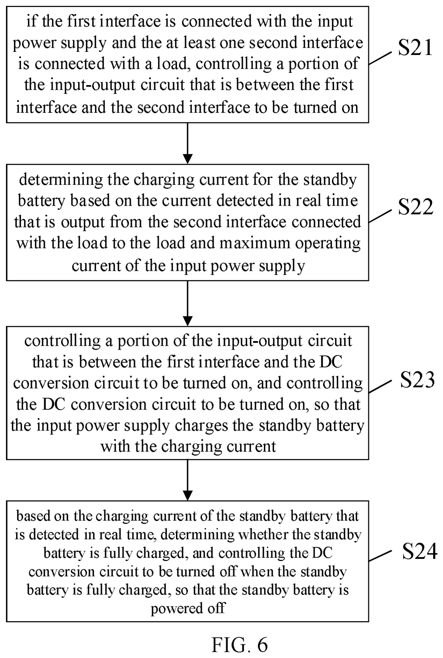

In some embodiments, the method further comprises: detecting, in real time, current output from the at least one second interface to the load and charging current of the standby battery; correspondingly, as shown in FIG. 6, the if the first interface is connected with the input power supply and the at least one second interface is connected with a load, controlling the input-output circuit to be turned on and controlling the DC conversion circuit to be turned on or off, so that the input power supply preferentially supplies power to the load with which the at least one second interface is connected and charges the standby battery when there is excess power, and powering off the standby battery when it is fully charged, includes:
a step S21: if the first interface is connected with the input power supply and the at least one second interface is connected with a load, controlling a portion of the input-output circuit that is between the first interface and the second interface to be turned on;
a step S22: determining the charging current for the standby battery based on the current detected in real time that is output from the second interface connected with the load to the load and maximum operating current of the input power supply;
a step S23: controlling a portion of the input-output circuit that is between the first interface and the DC conversion circuit to be turned on, and controlling the DC conversion circuit to be turned on, so that the input power supply charges the standby battery with the charging current;
a step S24: based on the charging current of the standby battery that is detected in real time, determining whether the standby battery is fully charged, and controlling the DC conversion circuit to be turned off when the standby battery is fully charged, so that the standby battery is powered off.

Specifically, taking FIG. 1 as an example, when the first interface DC1 is connected with the input power supply, a portion of the input-output circuit 10 that is between the first interface DC1 and the second interface DC2 is turned on, causing the input power supply to supply power to the load. In addition, the control unit 30 detects voltage to ground Viout of the load sampling resistor R6, and then calculates the actual discharge current to the load as Iout=Viout/R6; assuming that the maximum operating current of the input power supply is Imax, as long as the charging current Ichg=Imax-Iout is ensured, the maximum utilization of the input power supply can be ensured to achieve simultaneous charging and discharging. According to the above logic, it can be seen that in the simultaneous charging and discharging state, the input power supply preferentially outputs power to the load, and charges the standby battery BT when there is excess power. When the standby power supply circuit 001 includes two or more second interfaces DC2, and multiple second interfaces DC2 are connected to the load separately, the calculation method is similar and will not be repeated here.

To better understand the control method of a standby power supply circuit provided in the present application, the control method of a standby power supply circuit provided in the present application will be described in detail using the standby power supply circuit 001 shown in FIG. 1 as an example.

As shown in FIG. 1, the control unit 30 can be an MCU (not limited to singlechip, DSP, FPGA, etc.), or an MCU+external analog chip. The connection relationship between the control unit 30 and other components of the standby power supply circuit is as follows: PWM1H is connected to a gate terminal (gate) of the fourth switching transistor Q4, PWM1L is connected to a gate terminal of the fifth switching transistor Q5, PWM2L is connected to a gate terminal of the seventh switching transistor Q7, POWM2H is connected to a gate terminal of the sixth switching transistor Q6, VI is connected to voltage divider resistors R3 and R4, BY_EN is connected to a gate terminal of the first switching transistor Q1, OUT_EN is connected to a gate terminal of the third switching transistor Q3, OUT_DET is connected to the detection pin 2c of the interface DC2, IN_DET is connected to the detection pin 1c of the interface DC1, and IN_EN is connected to a gate terminal of the second switching transistor Q2. The first positive pin 1a of the interface DC1 is connected to a source terminal (source) of the first switching transistor Q1, a source terminal of the second switching transistor Q2, and one end of the voltage divider resistor R3, while the first negative pin 1b is connected to a ground wire. The second positive pin 2a of the the interface DC2 is connected to a source terminal of the third switching transistor Q3 and a drain terminal (drain) of the first switching transistor Q1, while the second negative pin 2b is connected to one end of the load sampling resistor R6.

The standby power supply circuit 001 has four states: standby, discharge, charge, and simultaneous charging and discharging. The switching logic and conditions between the states are as follows:
when there is no load and no charging adapter is connected (i.e. no input power supply is connected), that is, when the charging adapter is not connected, it defaults to be in a standby state, at this time, OUT _EN, IN_EN and BY_EN are set to be at low level, the first switching transistor Q1, the second switching transistor Q2, and the third switching transistor Q3 are turned off, and PWM1H/PWM1L/PWM2H/PWM2L outputs low level, and the fourth switching transistor Q4/fifth switching transistor Q5/sixth switching transistor Q6/seventh switching transistor Q7 are turned off, and the DC conversion circuit 20 stops working. Because there is no line material connected, the detection pins 1c and 2c of the interface DC1 and the interface DC2 are respectively short-circuited to the negative pins 1b and 2b, therefore, OUT_DET and IN_DET are both at a low level at this time.

When the load line is connected separately, the second detection pin 2c in the interface DC2 is detached from the second negative pin 2b due to a DC male connector being connected (by default, when there is no line material connected, the second detection pin 2c and the second negative pin 2b are short circuited). Therefore, OUT_DET is pulled up from the low level to the high level. After the control unit 30 detects the level change, it turns on the DC conversion circuit 20, sets the OUT_EN to high level, and sets IN_EN and BY_EN to low level. The third switching transistor Q3 is turned on, the second switching transistor Q2 and the first switching transistor Q1 are turned off; the interface DC2 outputs a preset voltage to supply power to the load. After the load is removed, it returns to the standby state, and the state of each pin of the control unit 30 is the same as the state of each pin of the control unit 30 in the standby state described above.

The standby power supply circuit 001 enters the simultaneous charging and discharging state after an adapter is connected (i.e., the input power supply is connected) in the discharging state. At this time, IN_EN and BY_EN are set to high level, OUT_EN is set to low level, the second switching transistor Q2 and the first switching transistor Q1 are turned on, and the third switching transistor Q3 is turned off. Since the first switching transistor Q1 is turned on, the adapter directly supplies power to the load. At the same time, the control unit 30 detects that the voltage to ground of the load sampling resistor R6 is Viout, and the actual discharge current to the load can be calculated as Iout=Viout/R6; assuming that the maximum operating current of the adapter is Imax, as long as Ichg=Imax-Iout is ensured, the maximum utilization of the adapter can be ensured to achieve simultaneous charging and discharging. According to the above logic, it can be seen that in the simultaneous charging and discharging state, the adapter preferentially outputs power to the load, and charges the standby battery BT when there is excess power.

The load is removed in the simultaneous charging and discharging state, or the adapter is connected in standby state. The standby power supply circuit 001 enters the charging state, the second switching transistor Q2 is turned on, and the third switching transistor Q3 is turned off, at this time, the standby battery BT is charged at full speed. In this case, the first switching transistor Q1 can be in the on state or the off state. When the first switching transistor Q1 is in the off state, it can be controlled to be turned on when the output detection pin OUT_DET detects that the second interface DC2 is connected to the load.

It can be seen that, with the standby power supply circuit and a control method thereof provided in this embodiment, DC power can be output without human intervention when the device is connected and at the moment of power outage, and meanwhile the power path is managed well to ensure the service life of the battery. Compared with traditional UPS, the standby power supply circuit provided in this embodiment is both economical and effective.

It should be noted that herein relational terms such as "first" and "second" are only used to distinguish one entity or operation from another entity or operation, and do not necessarily require or imply that any such actual relationship or order is existed between the entities or operations. Moreover, the terms "comprise", "include" and any other variation thereof are intended to cover non-exclusive inclusions, so that a process, a method, an article or a device including a series of elements includes not only those elements, but also other elements not explicitly listed or elements inherent to the process, the method, the article or the device. Without further limitations, an element defined by a phrase "comprising a ..." does not exclude the existence of other identical elements in a process, a method, an article or a device including the element. The terms "upper", "lower", etc. indicate an orientation or position relationship based on the orientation or position relationship shown in the drawings, merely for convenience of description and simplification of the present application, but do not indicate or imply that the device or element referred to must have a particular orientation, be constructed and operated in a specific orientation, and therefore should not be construed as limiting the present application. Unless otherwise clearly specified and defined, the terms "installation", "connection", and "connecting" should be broadly understood, for example, it can be fixed connection, or detachable connection, or integral connection; it can be mechanical connection or electrical connection; it can be direct connection, or indirect connection through an intermediate medium, or internal communication between two element. For those ordinarily skilled in the art, the specific meaning of the terms in this application may be understood on a case-by-case basis.

The various embodiments in the specification are described in a progressive manner, and the same or similar parts between the various embodiments may be referred to each other, and each embodiment focuses on the differences from the other embodiments. In the description, reference terms "one embodiment", "some embodiments", "example", "specific example" or "some examples" are used to mean that specific features, structures, materials or characteristics described by combining the embodiment or example are included in at least one embodiment or example in the embodiments of the present specification. In the present specification, exemplary expression of the above terms does not necessarily refer to the same embodiment or example. Moreover, the described specific features, structures, materials or characteristics may be combined in a suitable manner in any one or more of the embodiments or examples. Furthermore, those skilled in the art can combine different embodiments or examples described in the present specification and features of the different embodiments or examples in the case that they are not contradictory to each other.

The present application adopts specific embodiments to explain the principle and implementation way of the present application. The above embodiments are described merely for helping to understand the method and core concept of the present application; in addition, a person skilled in the art can, on the basis of the concept of the present application, make modifications to both of the specific embodiments and application scope. In conclusion, contents disclosed herein should not be understood as limitation to the present application.

## Claims

1. A standby power supply circuit, wherein, comprising a first interface, at least one second interface, an input-output circuit, a DC conversion circuit, a control unit, and a standby battery;
wherein the first interface is connected to an input end of the input-output circuit, and the at least one second interface is connected to an output end of the input-output circuit;
a first end of the DC conversion circuit is connected to the standby battery, and a second end of the DC conversion circuit is connected to the input-output circuit;
the control unit is connected to the first interface, the at least one second interface, the input-output circuit and the DC conversion circuit respectively, the control unit detects connection status of the first interface and connection status of the at least one second interface, and controls operation status of the input-output circuit and the DC conversion circuit according to the connection status of the first interface and the connection status of the at least one second interface.

2. The standby power supply circuit according to claim 1, wherein, the first interface comprises a first DC female socket which includes a first positive pin, a first negative pin and a first detection pin, wherein when the first DC female socket is not connected with an input power supply, the first detection pin is short-circuited to the first negative pin, and when the first DC female socket is connected with an input power supply, a first DC line of the input power supply pushes the first detection pin having elasticity upwards to be open, causing the first detection pin to be detached from the first negative pin;
the second interface comprises a second DC female socket which includes a second positive pin, a second negative pin and a second detection pin, wherein when the second DC female socket is not connected with a load, the second detection pin is short-circuited to the second negative pin, and when the second DC female socket is connected with a load, a second DC line of the load pushes the second detection pin having elasticity upwards to be open, causing the second detection pin to be detached from the second negative pin.

3. The standby power supply circuit according to claim 2, wherein, the control unit comprises an input detection pin and an output detection pin, wherein the input detection pin is connected to the first detection pin, the number of the output detection pin is greater than or equal to the number of the second interface, and the second detection pin of each of the second interfaces is connected to one of the output detection pins.

4. The standby power supply circuit according to claim 3, wherein, further comprising a load sampling resistor, wherein the number of the load sampling resistor is greater than or equal to the number of the second interface, and the second negative pin of each of the second interfaces is grounded through one of the load sampling resistors;
the control unit further comprises a current output detection pin, wherein the number of the current output detection pin is greater than or equal to the number of the second interface, and the second negative pin of each of the second interfaces is connected to one of the current output detection pins.

5. The standby power supply circuit according to claim 4, wherein, further comprising a charging sampling resistor, wherein a negative electrode of the standby battery is grounded through the charging sampling resistor;
the control unit further comprises a charging current detection pin which is connected to a negative electrode of the standby battery.

6. The standby power supply circuit according to any of claims 2 to 5, wherein, the input-output circuit comprises a first branch circuit and a second branch circuit connected in parallel, and the second end of the DC conversion circuit is connected to the second branch circuit.

7. The standby power supply circuit according to claim 6, wherein, the first branch circuit comprises a first switching transistor, the second branch circuit comprises a second switching transistor and a third switching transistor, and the control unit comprises a first enable pin, a second enable pin, and a third enable pin; wherein
a first end of the first switching transistor is connected to the first positive pin, a second end of the first switching transistor is connected to the second positive pin of each of the second interfaces, and a third end of the first switching transistor is connected to the first enable pin of the control unit;
a first end of the second switching transistor is connected to the first positive pin, a second end of the second switching transistor is connected to a first end of the third switching transistor, a second end of the third switching transistor is connected to the second positive pin of each of the second interfaces, a third end of the second switching transistor is connected to the second enable pin of the control unit, and a third end of the third switching transistor is connected to the third enable pin of the control unit;
the second end of the DC conversion circuit is connected to the second end of the second switching transistor.

8. The standby power supply circuit according to claim 7, wherein, the DC conversion circuit comprises a buck-boost circuit, a boost circuit, or a buck circuit.

9. The standby power supply circuit according to claim 8, wherein, the buck-boost circuit comprises a first capacitor, a fourth switching transistor, a fifth switching transistor, a first inductor, a sixth switching transistor, a seventh switching transistor and a second capacitor; the control unit includes a first output pin of a high level for outputting a first pulse modulation signal, a second output pin of a low level for outputting the first pulse modulation signal, a third output pin of a high level for outputting a second pulse modulation signal, and a fourth output pin of a low level for outputting the second pulse modulation signal; wherein
a first end of the first capacitor is connected to the second end of the second switching transistor, and a second end of the first capacitor is grounded;
a first end of the fourth switching transistor is connected to a first end of the first inductor, a second end of the fourth switching transistor is connected to the first end of the first inductor, and a third end of the fourth switching transistor is connected to the first output pin of the control unit;
a first end of the fifth switching transistor is connected to the first end of the first inductor, a second end of the fifth switching transistor is grounded, and a third end of the fifth switching transistor is connected to the second output pin of the control unit;
a first end of the sixth switching transistor is connected to a second end of the first inductor, a second end of the sixth switching transistor is connected to the positive electrode of the standby battery, and a third end of the sixth switching transistor is connected to the third output pin of the control unit;
a first end of the seventh switching transistor is connected to the first end of the sixth switching transistor, a second end of the seventh switching transistor is grounded, and a third end of the seventh switching transistor is connected to the fourth output pin of the control unit;
a first end of the second capacitor is connected to the positive electrode of the standby battery, and a second end of the second capacitor is grounded.

10. The standby power supply circuit according to claim 8, wherein, the boost circuit comprises a third capacitor, an eighth switching transistor, a ninth switching transistor, a second inductor, and a fourth capacitor; the control unit includes a first output pin of a high level for outputting a first pulse modulation signal, and a second output pin of a low level for outputting the first pulse modulation signal; wherein
a first end of the third capacitor is connected to the second end of the second switching transistor, and a second end of the third capacitor is grounded;
a first end of the eighth switching transistor is connected to the first end of the third capacitor, a second end of the eighth switching transistor is connected to the first end of the second inductor, and a third end of the eighth switching transistor is connected to the first output pin of the control unit;
a first end of the ninth switching transistor is connected to the second end of the eighth switching transistor, a second end of the ninth switching transistor is grounded, and a third end of the ninth switching transistor is connected to the second output pin of the control unit;
the second end of the second inductor is connected to the positive electrode of the standby battery;
a first end of the fourth capacitor is connected to the positive electrode of the standby battery, and a second end of the fourth capacitor is grounded.

11. The standby power supply circuit according to claim 8, wherein, the buck circuit comprises a fifth capacitor, a third inductor, a tenth switching transistor, an eleventh switching transistor and a sixth capacitor; the control unit comprises a third output pin of a high level for outputting a second pulse modulation signal and a fourth output pin of a low level for outputting the second pulse modulation signal; wherein
a first end of the fifth capacitor is connected to the second end of the second switching transistor, and a second end of the fifth capacitor is grounded;
a first end of the third inductor is connected to the first end of the fifth capacitor, a second end of the third inductor is connected to a first end of the tenth switching transistor, a second end of the tenth switching transistor is connected to the positive electrode of the standby battery, and a third end of the tenth switching transistor is connected to the third output pin of the control unit;
a first end of the eleventh switching transistor is connected to the first end of the tenth switching transistor, a second end of the eleventh switching transistor is grounded, and a third end of the eleventh switching transistor is connected to the fourth output pin of the control unit;
a first end of the sixth capacitor is connected to the positive electrode of the standby battery, and a second end of the sixth capacitor is grounded.

12. A control method of a standby power supply circuit, wherein, being based on the standby power supply circuit according to any of claims 1 to 11, the method comprising:
detecting connection status of the first interface and connection status of the at least one second interface;
controlling operation status of the input-output circuit and the DC conversion circuit based on the connection status of the first interface and the connection status of the at least one second interface.

13. The method according to claim 12, wherein, the controlling operation status of the input-output circuit and the DC conversion circuit based on the connection status of the first interface and the connection status of the at least one second interface includes:
if the first interface is not connected with the input power supply and none of the second interfaces is connected with a load, controlling the input-output circuit and the DC conversion circuit to be turned off;
if the first interface is not connected with the input power supply and the at least one second interface is connected with a load, controlling the DC conversion circuit to be turned on and controlling a portion of the input-output circuit that is connected between the DC conversion circuit and the second interface to be turned on, so that the standby battery supplies power to the load with which the at least one second interface is connected;
if the first interface is connected with the input power supply and the at least one second interface is connected with a load, controlling the input-output circuit to be turned on and controlling the DC conversion circuit to be turned on or off, so that the input power supply preferentially supplies power to the load with which the at least one second interface is connected and charges the standby battery when there is excess power, and powering off the standby battery when it is fully charged;
if the first interface is connected with the input power supply and none of the second interfaces is connected with a load, controlling the DC conversion circuit to be turned on and controlling a portion of the input-output circuit that is between the first interface and the DC conversion circuit to be turned on, so that the input power supply charges the standby battery.

14. The method according to claim 13, wherein, the method further comprises:
detecting, in real time, current output from the at least one second interface to the load and charging current of the standby battery;
correspondingly, the if the first interface is connected with the input power supply and the at least one second interface is connected with a load, controlling the input-output circuit to be turned on and controlling the DC conversion circuit to be turned on or off, so that the input power supply preferentially supplies power to the load with which the at least one second interface is connected and charges the standby battery when there is excess power, and powering off the standby battery when it is fully charged, includes:
if the first interface is connected with the input power supply and the at least one second interface is connected with a load, controlling a portion of the input-output circuit that is between the first interface and the second interface to be turned on;
determining the charging current for the standby battery based on the current detected in real time that is output from the second interface connected with the load to the load and maximum operating current of the input power supply;
controlling a portion of the input-output circuit that is between the first interface and the DC conversion circuit to be turned on, and controlling the DC conversion circuit to be turned on, so that the input power supply charges the standby battery with the charging current;
based on the charging current of the standby battery that is detected in real time, determining whether the standby battery is fully charged, and controlling the DC conversion circuit to be turned off when the standby battery is fully charged, so that the standby battery is powered off.
